## Europäisches Patentamt
## European Patent Office
## Office européen des brevets

(19)

(11) Publication number: **0 025 297**
**B1**

(12) # EUROPEAN PATENT SPECIFICATION

(45) Date of publication of patent specification: **23.01.85**

(21) Application number: **80302871.1**

(22) Date of filing: **19.08.80**

(51) Int. Cl.⁴: **H 02 K 17/28, H 02 K 3/28, H 02 K 41/025, H 02 K 17/02**

(54) Improvements in electrical machines.

(30) Priority: **28.08.79 GB 7929830**

(43) Date of publication of application:
**18.03.81 Bulletin 81/11**

(45) Publication of the grant of the patent:
**23.01.85 Bulletin 85/04**

(84) Designated Contracting States:
**BE CH DE FR GB IT LI SE**

(56) References cited:
**DE-B-1 120 182**
**DE-C- 470 021**
**GB-A-1 253 364**
**US-A-1 614 292**
**US-A-3 117 267**

**ELEKTROTECHNISCHE ZEITSCHRIFT ETZ-A,
vol. 95, no. 11, November 1974 Berlin DE W.
DELEROI et al.: "Einfluss der
Ständerwicklungsanordnung auf das
Betriebsverhalten von asynchronen
Linearmotoren", pages 601-606**

(73) Proprietor: **NATIONAL RESEARCH
DEVELOPMENT CORPORATION
101 Newington Causeway
London SE1 6BU (GB)**

(72) Inventor: **Kuznetsov, Stephen Bruce
10 York Terrace East
London NW1 4PT (GB)**
Inventor: **Laithwaite, Eric Robert
The Circles Wentworth Close Ditton Hill
Surbiton Surrey (GB)**

(74) Representative: **Chandler, Derek Richard
Patent Department National Research
Development Corporation 101 Newington
Causeway
London SE1 6BU (GB)**

## Description

This invention relates to electrical machines, and more particularly to brushless machines such as linear and cylindrical induction machines for operation on alternating current.

In electrical machines energy is wasted in various ways including friction, winding resistance and eddy currents. Such losses can be minimised by careful design of the mechanical aspects of the machine and by correct choice of constructional materials. There is however another defect which is related more to the nature of the electrical effects by which the machine operates. This defect is identified with a quantity called the power factor. The current and voltage in the machine are moved out of phase with one another resulting in an "imaginary" or reactive power component of the electrical energy involved. This reactive component cannot produce a useful output from the machine so it reduces the "real" power available in the machine, reducing the efficiency of both the machine and the associated electrical transmission path and increasing the construction and operating costs of both.

Despite these disadvantages the simple, robust construction of induction machines has led to their widespread use with the acceptance of this cost penalty. Clearly with increasing material and manufacturing costs this penalty is less acceptable.

Induction motors are generally cylindrical and symmetrical but motors have been proposed and occasionally made with a rotor only partly encircled by an arcuate stator. Such machines are known as "arch motors" or "motors with an open magnetic circuit". The partial stator introduces asymmetry into the electrical and magnetic states which is distinct from the symmetry of a conventional cylindrical machine. Professor Sir Frederic Williams analysed these states (Proc. I.E.E. 104A (1957) p. 102 and 106A (1959) p. 471). A conventional induction motor has a lagging power factor with a stator current pattern travelling at synchronous speed and induced (printed) in the rotor an identical pattern also travelling at synchronous speed but displaced in the direction of motion in dependence on the ratio of load current to magnetising current. (This ratio is the "Goodness Factor" of the machine and should be as high as possible).

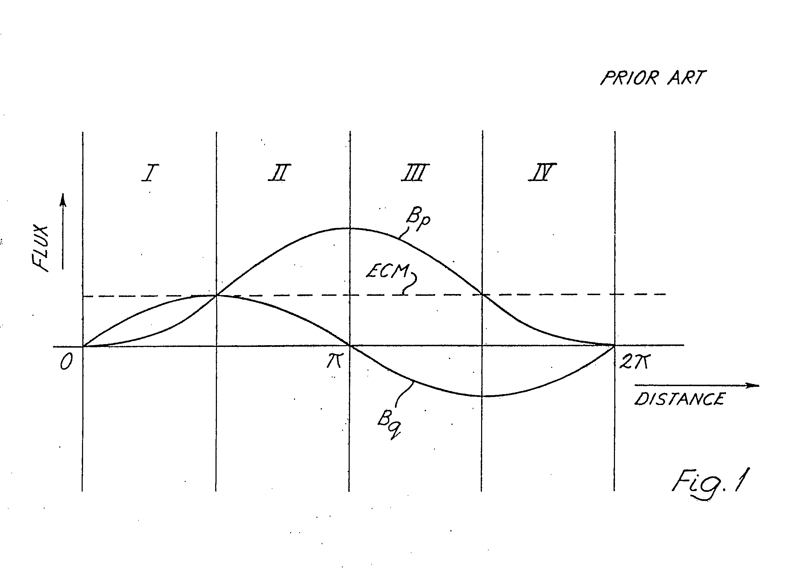

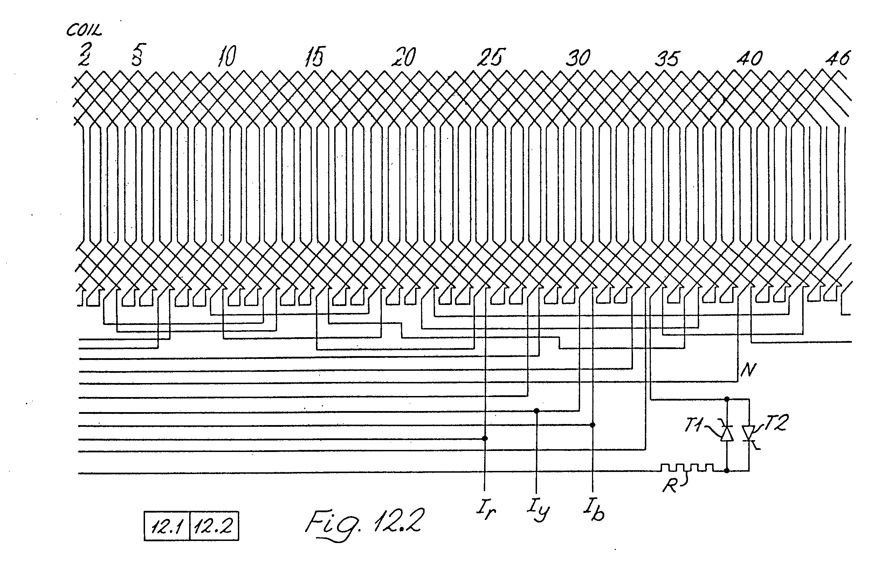

Professor Williams suggested for the arch motor a second induced current pattern in the rotor due to transients on the entry of unmagnetised rotor material under the leading edge of the stator and identical to the stator current pattern but travelling at *rotor* speed. Figure 1, which is similar to Figure 12 of the first of the above references, illustrates the analysis on p. 108 of this reference. Figure 1 is a plot of flux in the stator/rotor gap against distance along the gap normalized as radians in terms of pole pitch and slip to be independent of any particular machine condition. The flux level marked ECM is that of the steady-state in-phase flux of an "equivalent conventional machine". The two flux components drift in and out of phase during rotation of the rotor producing the Bp and Bq curves shown in Figure 1. It should be emphasised that these curves relate to a perfect machine, i.e. one requiring zero magnetising currents and having zero magnetic leakage. The area under the Bp curve is a measure of the useful power output of the machine as a motor.

The maximum machine efficiency occurs at $\pi$ on the distance axis. The area in quadrants III and IV between Bp and ECM represents a reduction in electrical losses in comparison with a conventional machine. The maximum power factor occurs at a slip distance product of $2\pi$ and in fact from the equal graph areas on either side of the axis appears to be unity. (The ECM level of Bq is zero, i.e. the distance axis).

Prior to reaching $2\pi$ the power factor which is the integral of the Bq waveform is always lagging and at $2\pi$ the air gap power factor is unity. The second current pattern leads to higher rotor losses than in a cylindrical machine, indicated by the area above the Bp curve but below ECM. Also on exit from the stator "back torques" arise when the magnetised rotor teeth continue to move from beneath the final energised stator blocks, again leading to transients which result in further losses. In particular a "perfect" arch machine, i.e. having no leakage flux and drawing no magnetising current would still draw reactive volt amperes from the supply whenever the region between the Bq curve and the axis has more positive area than negative area, resulting in lower, i.e. poorer, power factor.

The amount of reactive power is indicated by the value of the power factor. This is unity when reactive power is not being drawn. When reactive power is drawn the power factor is less than unity. The higher the proportion of reactive power the lower the power factor. Inductive loads, typically induction motors, have a lagging power factor between 1.0 and zero while capacitive loads, which are very rare, have a leading power factor between 1.0 and zero and can offset inductive loads on a common supply. Accordingly the arch motor, and open magnetic machines in general, are at a disadvantage, apart from applications where other properties outweigh this poor power factor disadvantage.

Reference has been made to stators and rotors above but as the terms are not always clearly identifiable with machine parts the terms primary and secondary will be used herein respectively to identify that machine part connected to a supply of electricity and that part coupled to the primary by electromagnetic effects. Where the term "winding" is used this includes a solid element of the type found in some linear motors. The term machine extends to both generators and motors.

Various forms of electrical machine have been proposed in which the winding form is not that of similar regularly spaced coils. However none of these have been attempts to solve the problem of poor power factor.

GB—A—1263364 deals with the problem of reducing the height of a motor shaft above the base. The solution is to cut away part of the bottom of the stator, reducing the shaft height, and make changes to the winding layout to compensate for the total or partial loss of flux and magnetic circuit material. In proposing this solution the need to avoid magnetic saturation or flux unbalance and to produce a uniformly rotating magnetic field are emphasised and no attention is paid to the power factor problem.

DE—C—470021 deals with the problem of producing a mechanical action at a changing speed with an electrical machine without the need for a variable frequency electrical supply. A machine with a pole pitch varying from point-to-point is proposed. While this proposal will no doubt achieve the desired result it does not deal with the problem of power factor improvement.

An article in ETZ-A vol. 95, No. 11, November 1974 at pages 601 to 606 by W. Deleroi et al deals with a specific problem of certain linear motors. (This problem does not occur in cylindrical motors). The entry and exit parts of the winding are modified to avoid "end effects". Further bad effects, due to additional alternating fluxes in the stator of existing machines, are also reduced by these modifications. The modifications do improve the efficiency of the particular class of machines dealt with but only by reducing a shortcoming of the specific class of machine by a solution which is not applicable or relevant to other machines. There is thus no attention to the general problem of poor power factor.

These proposals show that while various forms of irregular winding and stator are known per se in electrical machines none is related to improved power factor.

There is therefore an unanswered requirement for a general technique to improve power factor in electrical machines especially of the induction type.

It is an object of the invention to provide an electrical machine in which transient states exist but which has a better power factor than the equivalent conventional machine and which preferably is at about unity or even leading.

According to a first aspect of the invention there is provided an alternating current electrical machine having a first machine portion and a second machine portion supported for relative movement and an air-gap between the portions, the machine having a primary winding of electrically conductive material on said first portion and a secondary winding of electrically conductive material on said second portion, means to energise at least said primary winding with an alternating current to produce a flux in said gap, said primary winding (ST) being of a form to create and maintain a field (SRF) along the gap, characterised in that the primary winding includes one part wound for at least two poles to one pole pitch ($T_{p1}$, STAL LIMB) and at least another part wound for at least two successive poles to a shorter pole pitch ($T_{p2}$, $T_{p3}$, STAA, ASCB) to provide at least first and second respective sets of magnetic and electric field conditions across said gap, whereby negative reactive volt-amperes are produced (Fig. 5) in said another part of the primary winding by the movement relative thereto of the secondary winding (RO, ROC, SYB).

According to a second aspect of the invention there is provided an alternating current electrical machine having a first machine portion and a second machine portion supported for relative movement and an air-gap between the portions, the machine having a primary winding of electrically conductive material on said first portion and a secondary winding of electrically conductive material on said second portion, means to energise at least said primary winding with an alternating current to produce a flux in said gap, said primary winding being of a form to create and maintain a field along the gap characterised in that the number of turns per coil in one part of the primary winding is different from that in another part of the primary winding and by means to connect the parts of the primary winding in phase-shifted relation whereby the specific electric loading of said parts of the primary winding is different whereby negative reactive volt-amperes are produced (Fig. 5) in said another part of the primary winding by the movement relative thereto of the secondary winding.

The primary winding can provide change in spatial phase between adjacent parts of the winding.

The modification of the pole phase relation and/or pitch can be achieved by a fixed winding form. The modification can also be achieved by control of the quadrature flux component of one or more transient-creating pole or part-pole primary windings spaced around the stator of a cylindrical machine to control the effective width of a region of transient electromagnetic conditions.

According to a third aspect of the invention there is provided a use of operating an electrical machine system including such an electrical machine by providing therein an asynchronous condenser winding arranged to recover reactive power during the operation of the machine, thereby improving the efficiency of the machine. The use may include providing an inverter to supply the machine with alternating current at a fixed or variable frequency, the asynchronous condenser permitting operation with reactive power despite the inability of the inverter to provide reactive power. The use may include arranging that the asynchronous condenser winding with the rotor inertia provides a filter for unwanted harmonics.

Conveniently the machine is a brushless electrical machine having a wound, uniformly slotted stator and a uniform rotor.

Embodiments of the invention will now be described with reference to the accompanying drawings in which:

Figure 1 is a graph relating to an explanation of effects already observed in electrical machines;

Figure 2 shows a primary winding layout according to the invention for a primary (stator) of a linear induction motor;

Figure 3 shows a plot of coil voltage phase angles for some coils of one phase of the stator in Figure 2;

Figure 4 shows a further winding layout according to the invention;

Figure 5 shows a plot of coil voltage phase angle for some coils of all phases of the stator of Figure 1 in a modified connection arrangement;

Figure 6 shows a prior art connection arrangement for a 10,000 HP linear induction motor;

Figures 7a and 7b show constructional (6a) and circuit (6b) details of a variable speed arrangement embodying the invention;

Figures 8a and 8b show in outline the distribution of types of primary (stator) winding in linear and cylindrical machines embodying the invention;

Figure 9 shows in outline another such winding distribution embodying the invention for a cylindrical machine;

Figure 10 shows the primary (stator) winding details for a 10 pole squirrel cage motor conforming to the outline in Figure 9;

Figures 11a and 11b show a connection arrangement embodying the invention;

Figure 12 shows such a winding diagram for a motor including s.c.r. devices in the winding; and

Figures 13 and 14 show graphs useful in explaining the behaviour of machines such as are shown in Figures 9 and 10.

The invention will be described as applied to a linear induction motor. This machine form is not necessarily a preferred embodiment but is a convenient form of operating and analysing the invention. As described below the invention is applicable to various machine forms and the exact machine form is not part of the invention.

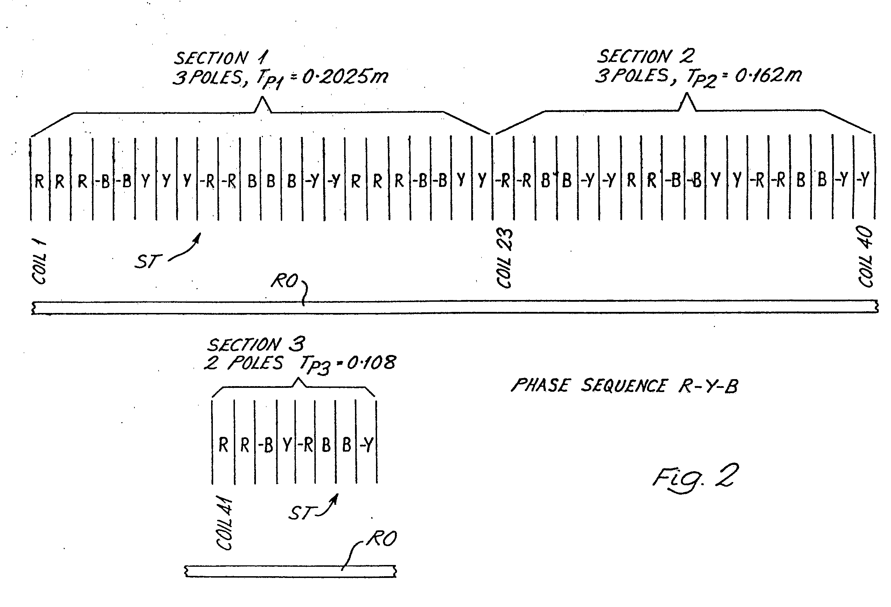

Figure 2 shows the winding layout of a stator ST for a short-primary (stator) single-sided linear induction motor having a secondary (rotor) RO of aluminium sheet 3/8 inch (9.5 mm) thick and backed by a steel sheet 3/4 inch (19 mm) thick. The aluminium is tungsten inert gas welded to ensure electrical continuity and prevent rotor induced transients. The stator faces the aluminium with a small air-gap preferably in the range of 1/10 inch (2.5 mm) to 1/25 inch (1 mm). The stator and rotor are both shown symbolically in Figure 1 and could be of several suitable constructional forms.

The stator block is 4 1/2 feet (1.46 m) long and has 54 slots 14.3 mm wide by 38.1 mm deep on a 27 mm pitch. 48 coils with 12 turns per coil were wound on to the stator and connected as shown in Figure 2. The connections provide three different field speeds when energised with a single-frequency 3-phase supply in the sequence R-Y-B. The phases are indicated in Figure 2 by the respective letters R, Y and B. In the winding coils 1 to 22, section 1, provide three poles at pole pitch $T_{p1}$ of 0.2025 m; coils 23 to 40, section 2, also provide three poles but at a pitch $T_{p2}$ of 0.162 m and coils 41 to 48 provide two poles at a pitch $T_{p3}$ of 0.108 m.

For a given energisation frequency the field speed of section 2 is 80% of that of section 1 while for section 3 it is 53.3% of that of section 1. The decelerating field pattern is a feature of one aspect of the invention. As the slip varies the effect of sections 2 and 3 will change. Thus by way of example at a slip of 0.5 for section 1 the construction produces a slip of 0.375 for section 2 and 0.062 for section 3, all three sections giving some forward thrust to the rotor. However at a slip of 0.25 for section 1 the slip of section 2 is apparently +0.062 and for section 3 is apparently −0.406, i.e. section 3 is apparently a power generator.

However it must be remembered that the whole of the pole surface is operating under transient conditions at all times. Thus it must not be assumed that an apparent negative slip, say for section 3, implies a reversed thrust. It is at precisely this combination of conditions and slip that accumulation of leading reactive volt amperes begins, substantially without loss of thrust. The effect of the machine structure according to the invention that is achieved can be represented on Figure 1. Instead of the continuously repeating cycle of flux values known hitherto Bp can be held at the ECM level value and Bq at the negative peak value. The cyclic curves then become horizontal lines (not shown) at these values indicating the action of the invention in changing the nature of machine operation. These lines also indicate the production of useful power (between Bp and the axis) and the accumulation of leading reactive volt amperes (beneath the axis down to Bq). This continuous recovery of leading reactive power is an important advantage and hitherto unobtainable action which permits the offsetting of the lagging reactive power of the propulsion portion of the machine.

The machine described was tested with all coils in series connection and energised at 50 Hz. Sections 2 and 3 can be considered as forming a generator of reactive volt amperes (VAR), i.e. out-of-phase, which operates without significant braking thrust, while section 1 provides propulsive thrust drawing power from the supply at a lagging power factor.

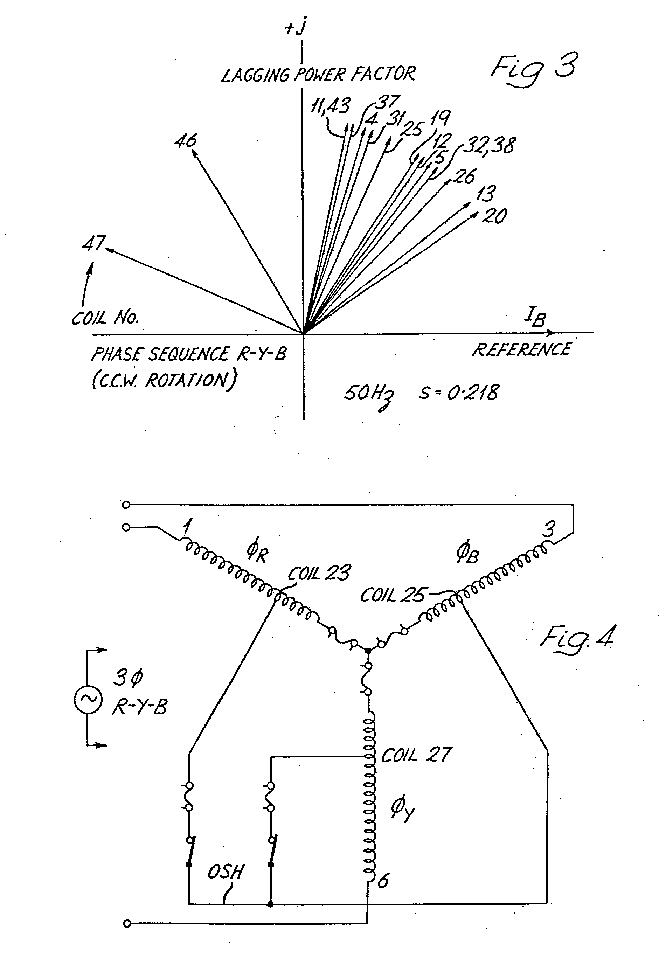

Each stator tooth, i.e. within each coil, had a search coil to permit measurement off tooth flux at slot pitch resolution. The search coils were in 0.5 mm grooves in the centre of each tooth face. Figure 3 shows a plot of coil current phase angles for the B phase at 50 Hz and 0.218 slip. The angles range from 28° to 156°. However none of the coils actually had a leading power factor, probably because all had equal ampere turns, all the coils being similar.

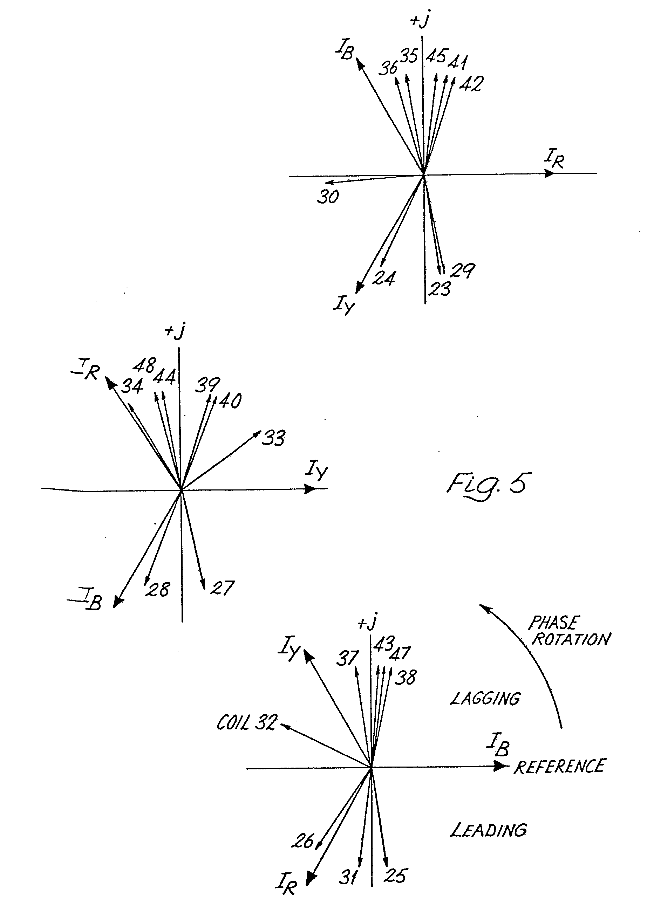

To permit an estimate of a better winding arrangement for sections 2 and 3 a shunting loop of virtually zero impedance was applied. Figure 4 shows this at OSH. Coils 23, 25 and 27 of Figure 2 were each connected directly to a floating star point, switches being included to enable the loop to be opened and closed. The machine was then operated with the same excitation and mains current as above. The light running speed was higher, the overall power factor was improved by 30% taking account of the recoverable reactive power and, most importantly, 9 coils in winding section 2 showed *leading* power factors on measurements with two independent devices, viz an electronic phase meter and a moving coil VAR meter to eliminate the possibility of a spurious measurement.

Figure 5 shows power factor angle plots for the coils of sections 2 and 3 (coils 23—48). Coils 23 to 31 all had leading power factors. Additionally 5 coils in section 1 had phase angles of 45° to 48° indicating a lagging power factor of 0.7 which is about 8% better than for the basic machine, while coils close the section 1/section 2 transition shows phase angles of 30° to 40° indicating a potential power factor of 0.86 for total machine current. The voltage phasors in Figure 5 are distributed among all four quadrants whereas in a conventional rotary machine all would be in one quadrant. The phasor pattern was displaced bodily, showing an improvement in overall power factor, at higher values of mains current.

The action of the machine in this connection arrangement is to strongly couple section 1 to isolated sections 2 and 3 via the sheet rotor which provides a secondary circuit. The coupling permits the magnetisation of the stator core of isolated coil sections 2 and 3 by rotor currents only and the continuous production of leading power factor current in these coil sections purely by electromagnetic induction from a brushless rotor.

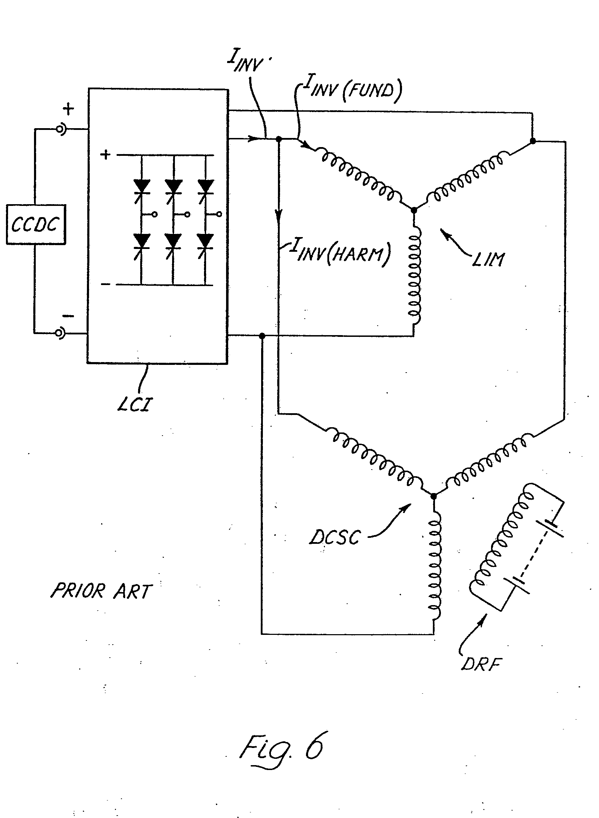

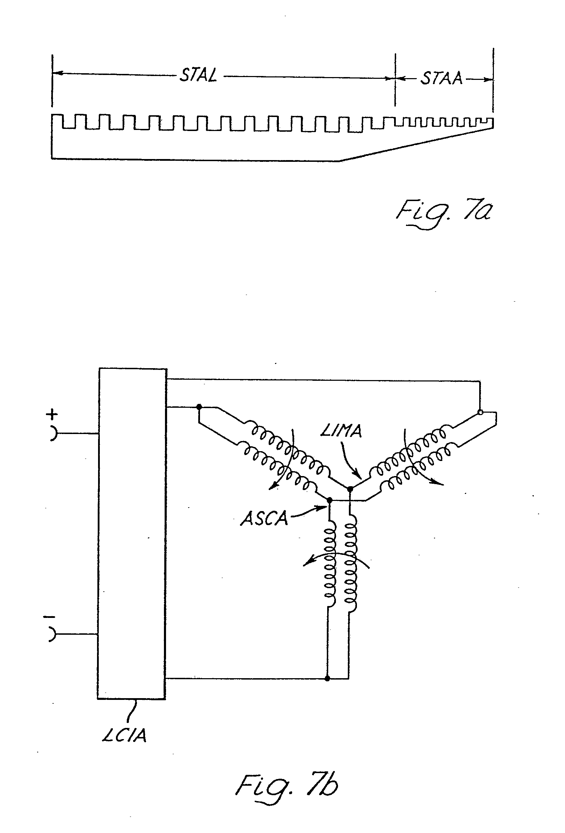

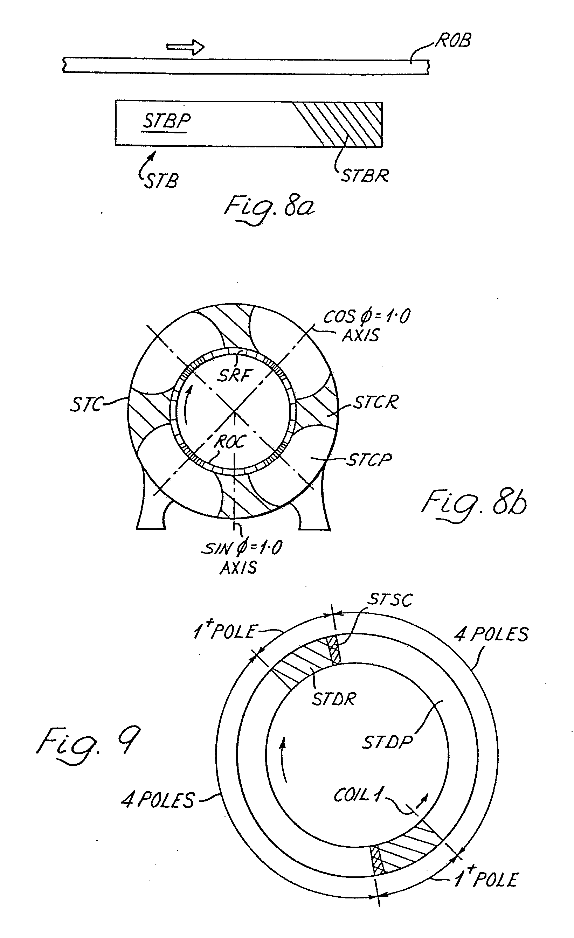

Practical applications of the invention demonstrated by the above tests are exemplified below. Figure 6 shows a common, prior art, arrangement for operating a 10,000 HP linear induction motor from a variable-voltage variable-frequency semi-conductor controlled rectifier inverter. Reactive power cannot pass through the inverter and is supplied wholly by the d.c. field synchronous condenser. Some 90% goes to the motor and 10% to commutate the inverter. In detail a constant current d.c.

source, CCDC, supplies a line-commutated square-wave inverter, LCI, to operate the linear induction motor, LIM, and the synchronous condenser, DCSC, which is in parallel with the series-connected LIM. The condenser DCSC additionally provides an effective harmonic filter. The synchronous condenser has a d.c. excited rotor DRF.

The invention permits a significant simplification and improvement of the prior art arrangement of Figure 6. By using the currents in the rotor RO, induced by section 1 of the windings of the stator ST in Figure 2, a magnetisation field to replace that of the d.c. energised rotor field DRF of Figure 6 can be produced. This field is applied to sections 2 and 3 of the stator ST which can now be considered as the stator windings of the synchronous condenser DCSC. In this arrangement the condenser is conveniently considered to be asynchronous (a.s.c.). Thus the test described with the zero-impedance connection of coils 23, 25, 27 can represent the provision of an asynchronous condenser with coils effectively in parallel with the stator (section 1) of a linear induction motor. The zero-impedance connection is then a way of avoiding the practical problem of matching stator section impedance levels for actual parallel connection. In this way the overall power factor can be improved.

An approximation to the matched impedance is provided by either adjustable complex impedances or a feedback-controlled s.c.r. mark-space ratio phase retarder in place of the zero-impedance loop.

A further advantage to machines embodying the invention to provide an a.s.c. is that the supply waveform need not be sinusoidal. A convenient and commonly used technique for variable speed drives is to use an induction motor energised from a variable-frequency supply using s.c.r. inverter devices. The induction motor is usually a fixed-pole type designed for a sinusoidal supply and unless very expensive complex inverters are used their output includes substantial square-wave components. These cause square-wave currents in the motor with excessive losses and unyielding harmonic torques. Clearly the Figure 6 prior art avoids these problems but requires a costly synchronous machine. The invention in one aspect provides a machine including an a.s.c. to act as filter of supply harmonics providing a substantially sinusoidal fundamental to the propulsive winding. The a.s.c. is provided by the modified part of the winding, e.g. sections 2 and/or 3 above. The a.s.c. winding requires a significantly higher 50 Hz impedance than the propulsive winding at the energisation frequency.

Desirably when the a.s.c. winding in combination with rotors of large inertia is used as an electromechanical current harmonic filter the a.s.c. winding offers maximum impedance to the fundamental while its lowest impedance can be designed to occur at the strongest harmonic which is usually the fifth in the case of a square wave inverter. Figure 7 shows at 7a a stator block STA and at Figure 7b an outline circuit for a variable speed arrangement of integrated machine LIMA and a.s.c. ASCA powered via a line (i.e. a.s.c.) commutated 6-s.c.r. bridge current source inverter (LCIA). This arrangement is for a linear machine and eliminates the need for large commutation capacitors or an auxiliary synchronous machine. Also, the weight and capital cost for a given rating will be reduced. The stator block STA has two slot regions, STAL at one uniform pitch for the linear machine and STAA at a shorter uniform pitch for the a.s.c. portion. The a.s.c. portion is of reducing iron section as the flux density falls as rotor currents decay after leaving the linear machine portion.

An important feature of the invention is that the frequency of the recovered electrical energy is the same as that supplied to the propulsion windings. The slip-frequency from propulsion winding to rotor and back to recovery winding is offset by the higher field speed in the recovery winding to bring this about. This harmony of the machine frequency is important in that among other things it permits the recovered energy to be sent back into the supply if this is desired.

Clearly the techniques described so far are applicable to cylindrical machines. Such a machine directly applying the techniques would require an unsymmetrical stator winding layout, in complete contrast to existing machine technology but although desirable an unsymmetrical slot layout is not essential to put the invention into effect. Details of such stators are considered below.

In the primary (stator) arrangements described so far power factor has been improved by recovery of exit-end power although the power factor of the propulsive, linear motor, part of the machine will still have the usual low power factor and excessive rotor ohmic losses albeit that these are at a reduced level. The constraint of exponential rise in air-gap flux along the propulsion windings will remain, although mitigated by the above recovery, but the power factor can be improved. Another constraint is that the stator current loading in the a.s.c. generator portion must be less than in the propulsive portion for a leading power factor.

In the embodiment now described the stator is further modified to improve the propulsive portion. Referring to the 48 coil stator STA of Figure 2 this is wound with coils 1 to 29 providing a 4 pole section of the same wavelength as the 3 pole section. Coils 39 to 48 are of a high impedance, while coils 30 to 38 are of a lower impedance, approximately one ninth that of coils 39 to 48, having one third the number of windings. Conveniently coils 30 to 38 are identical to coils 1 to 30. However coils 30 to 48 are parallel-connected to coils 1 to 29 via an external phase shifter permitting a variable stator current ratio between the propulsive part, coils 1 to 29, and the a.s.c. part, coils 30 to 48. Clearly the two a.s.c. coil sets 30 to 38 and 39 to 48 are in the fixed ratio of 1:3. In this way the stator current loading $J_{s(a)}$ of the a.s.c. can differ from that of propulsive part $J_{s(p)}$, and can also vary from coil to coil of the a.s.c. Conveniently for experimental use the phase shifter is an induction regulator. The change in stator current loading between propulsion and recovery windings is identified as a "J-jump", which is a term used herein to identify this technique. Series-connection is possible.

The regulator connection permits adjustment of machine conditions for different load conditions such as different mechanical loads and different machine terminal power factors. That is to say for differing balances of real and reactive powers resulting from the particular mode of the recovery section, if the mechanical load conditions are predictable and steady, e.g. a fan or pump, then a.s.c. windings star-connected to a floating star point can be connected to appropriate tappings on the propulsive windings to achieve the required current reduction at the load despite any impedance mismatch. Start up is inefficient due to the a.s.c. but this does not matter for steadily-running equipment. This tapped connection provides a commercially attractive device without an induction regulator or s.c.r. inverter.

Figure 8 compares in outline the allocation of propulsive and recovery portions (or power and reactive portions) in linear and cylindrical machines.

Figure 8a is a linear machine with a stator STB and solid or sheet rotor ROB. Portion STBP of the stator has the propulsive winding applying power at a lagging power factor to the machine to drive the rotor. Portion STBR (shaded) of the stator has the recovery winding recovering reactive power from the rotor at least partly at a leading power factor to improve the overall power factor. It will be seen that the allocation of windings along the stator is relatively uncomplicated and segregated, recovery being by "end-effect" action as the rotor moves out from under the stator. The technique of a change in current loading described above can be applied within sections of the recovery winding if required.

Figure 8b is a cylindrical machine, stator STC. The rotor ROC is not shown in detail but could conveniently be a conventional squirrel cage type. The rotor should however have a high ratio of magnetising, or demagnetising, inductance to rotor resistance to provide a good "memory" of applied flux during movement past the stator from propulsion to recovery portions. As in Figure 8a the large propulsive portions are shown unshaded while the smaller recovery portions are shaded. The propulsive flux distribution in the stator-rotor air gap is also indicated by the varying spacing of the notional flux lines (SRF).

The linear machines described so far can be improved by the "J-jump" technique of matching the recovery portion to the rotor to maximise leading power factor generation in the recovery windings, as mentioned above.

However, implicit in "J-jump" is the abrupt transition of air-gap flux at the exit end of the stator. In rotary machines this must not be allowed to happen. Some form of distribution of the recovery winding along and/or among the power winding is desirable. This alternative technique is identified herein by the term "theta-pinch" and permits the construction of a stator with uniform pole-pitch and nearly uniform stator current loading and flux in the air-gap. It is convenient for manufacturing and design reasons to have a form of lumped a.s.c. winding although a fully distributed a.s.c. winding has some theoretical advantages.

Both the "J-jump" and "theta-pinch" techniques described herein embody the invention and provide examples of constructional techniques for a.c. machine windings by means of which along a machine primary-secondary gap a transient to a different field condition across the gap can be achieved. The invention is not limited to embodiments of one or other of these techniques but these have been found effective in putting the invention into practice.

Figure 9 shows one possible distribution of the winding portions in a cylindrical machine with symmetrically spaced slots of equal width applying the "theta-pinch" technique. By way of example the machine chosen is basically a 3-phase 35 HP 10-pole squirrel cage induction motor. Clearly other frame sizes and pole numbers could be used. Stator and rotor details for the 10 pole machine are given in Table I.

TABLE I
Stator

| | |
|---|---|
| Bore diameter, mm | 316 |
| Number of slots | 90 |
| Coils throw slots | 1—11 incl |
| Core length, mm | 235 |
| Slot depth, mm | 34 |
| Slot width, mm | 6.0 |
| Slot pitch, mm | 11.1 |
| Pole pitch, m | 0.0989 |
| Number of turns/coil | Various |
| Pole—pitch: air-gap ratio | >150 |
| Rotor—Squirrel Cage Number of bronze bars | 80 |
| Bar width, mm | 5.0 |
| Bar depth, mm | 8.0 |
| Copper end ring, mm | 6.5×25.4 |
| Slot pitch at bottom of slot, mm | 10.9 |
| Tooth top width, mm | 10.0 |
| Ratio slot opening: air-gap | 1.5 |

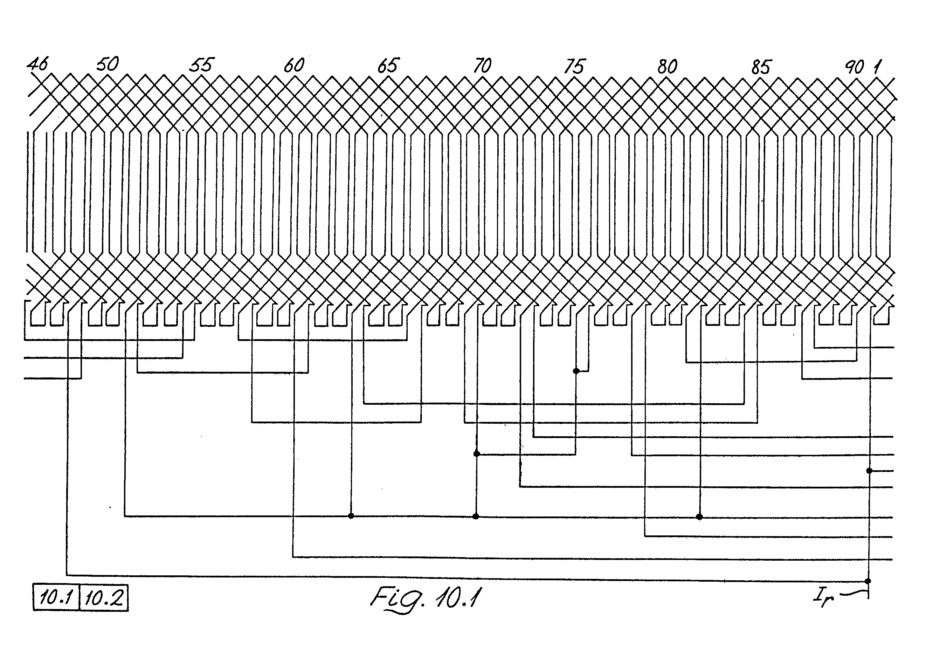

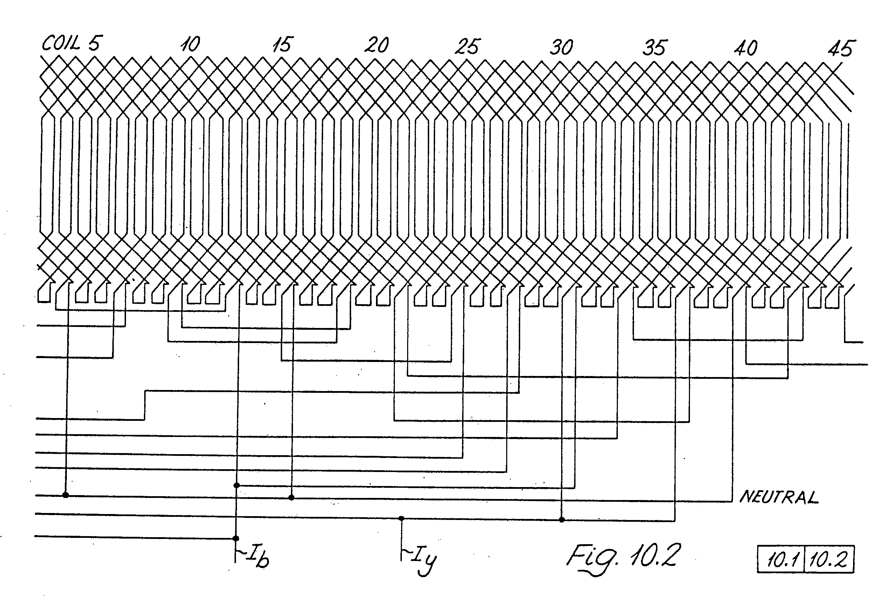

Figure 10 shows the developed coil connection diagram for the "theta-pinch" machine on such a stator starting at coil 1 in Figure 9. The power stator winding STDP is a conventional 4-pole polyphase winding with a uniform 3 slots/pole/phase. The recovery stator winding STDR has "1 plus" poles of high impedance, i.e. 28 turns per coil instead of 6 for the power winding. The total pole layout is

$$4-1^+-4-1^+.$$

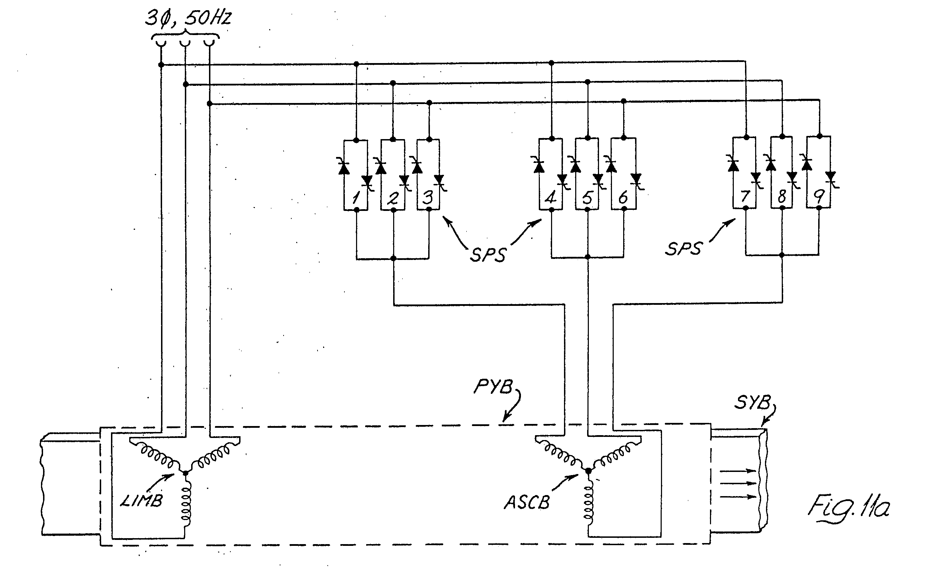

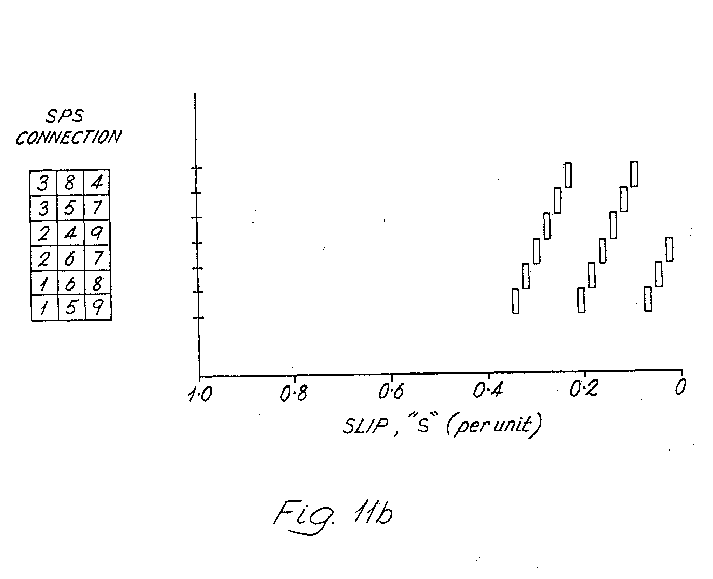

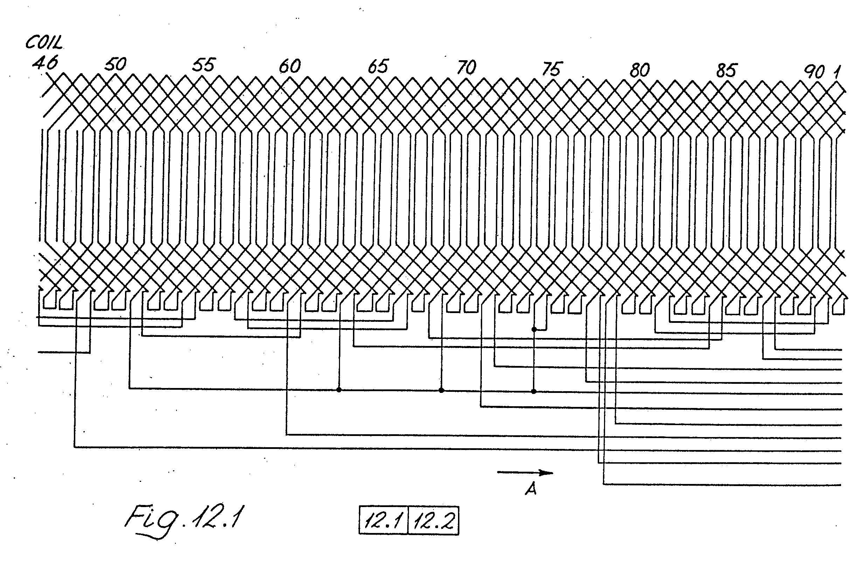

"1 plus" indicates that the a.s.c. poles have a "natural" pole pitch reduced from the power pole pitch by about $(1-s)$ where "s" is the per unit slip. The stator a.s.c. windings indicated schematically at STSC are connected directly to the power windings without the use of a phase shifter. The appropriate phase relationship has been "built-in" to the machine by the winding design. This relationship is not only the connection point along a phase winding but which of the propulsion phase windings is connected to which phase of the a.s.c. windings. This means that a particular winding design having a selected phase displacement ("theta-pinch") of the a.s.c. portion with respect to the propulsion portion is really only exactly appropriate for one frequency, one voltage, one load and one slip value, at which nil braking torque exists despite recovery of reactive power. Active techniques using cyclo-converter style circuits have been mentioned above and can cope with a very wide range by varying operating conditions. Figure 11 shows at Figures 11a and 11b an example of a circuit embodying the invention with such techniques.

Figure 11a shows a connection arrangement of a linear induction machine embodying the invention to permit the correct phase shift between the propulsion and a.s.c. windings over a wide speed range. The machine has a primary PYB of a propulsion portion LIMB and a condenser portion ASCB. The machine secondary, SYB, is, in this embodiment an elongate reaction rail. Clearly other machine constructions could be used. The propulsion portion LIMB is energised directly from the supply, typically $3\varphi$ 50 Hz. The condenser portion ASCB is connected to the same supply through a semiconductor phase shifter SPS. Conveniently this is a 6×60° phase shifter provided by s.c.r. devices in nine gated groups each containing a pair of devices, or possibly a suitable bilateral device.

Figure 11b shows the gating required for different slip values, on a per unit basis. The blocks in Figure 11b are permissible operating zones. A small, say $\pm 2\%$, adjustment of the operating voltage covers the "deadband" spaces. The distinction of the phase shifter from the superficially similar cyclo-converter is emphasised. Firstly there is only phase-shifting at 60° steps not frequency conversion. Secondly the devices are always gated at a zero delay angle without phase chopping, the aim is a transient-free connection of the a.s.c. and the supply at the desired phase. Thirdly the required gating is set by the phase difference between the propulsion and a.s.c. portions which is related to the reactive power capability of the condenser winding and the slip in the propulsion portion.

However a less complex technique is also needed for wider commercial acceptability and simplicity. For example semiconductor (s.c.r. or transistor) devices could be included in selected windings to extend the passively selected operating conditions by providing some automatic variation of phase relationship during operation.

An example of such a technique is shown in the machine winding layout of Figure 12. A short circuited coil is added to each a.s.c. section. The coils, numbers 34 and 78 in this machine are connected in series—aiding by way of a bilateral s.c.r. device ($T_1$, $T_2$) and surge limiting resistor R. Clearly more shorting coils can be used if desired. In this winding layout, and in Figure 10, the left hand coil in a slot is beneath the right hand one and arrow A indicates the rotor rotation sense.

The machines just described exemplify designs embodying the invention that are applicable to 10-pole squirrel cage motors. Other pole distributions, e.g. $8-2^+$ for a 10-pole machine could be used but care must be taken to avoid magnetic imbalance leading to mechanical stress.

Clearly some modification may be required for other motors.

It should be noted that the a.s.c. winding will be appropriate only for a particular narrow range of slip, but this may be designed to be anywhere in the wider range 0.20 per unit motoring to 0.20 per unit braking. Also the peak performance may be obtained at other than exactly at the supply frequency but this discrepancy will be small and performance is not very dependent on small changes of frequency over this range.

The machines described have solid or cage rotors but clearly a wound rotor can be used with advantage for the same reasons as wound rotors are used on conventional induction machines, in some circumstances.

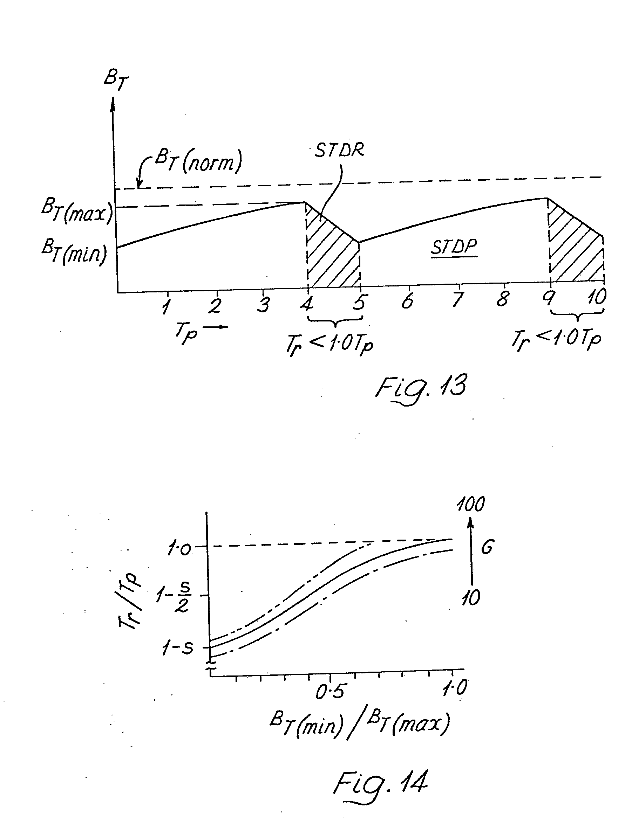

Figure 13 demonstrates an important characteristic of embodiments of some aspects of the invention, particularly those using the "theta-pinch" technique. Figure 13 is a plot of the distribution envelope of total air-gap flux for the machine of Figures 9 and 10. The winding portions of Figure 9 can be identified in Figure 13 as the horizontal axis is calibrated in unit poles from coil 1 in Figure 9. Tr is the notional pitch of a recovery pole which is less than that of a propulsive pole (Tp). Line $B_{T(nom)}$ is the total nominal level of flux in the air gap for a conventional induction motor wound on the frame used. $B_{T(max)}$ and $B_{T(min)}$ are the extremes of air-gap flux resulting from the use of propulsive and recovery (a.s.c.) windings. The total value for $B_T$ is given by

$$(Bp^2 + Bq^2)^{1/2}$$

i.e. the vector sum of the in-phase (Bp) and quadrature (Bq) flux. The plot is valid for a per unit slip(s) between zero and 0.20.

The values of $B_{T(max)}$ and $B_{T(min)}$ can be controlled by adjusting the effective width and position (in pole pitch units) of the "theta-pitch" winding portions (STDR in Figures 9, 10 and 13. Figure 14 shows the relation between the ratio $B_{T(min)}/B_{t(max)}$ and the ratio of the pitch of the recovery pole (Tr) to that of a propulsive pole (Tp), i.e. Tr/Tp. The ratio Tr/Tp is expressed in terms of slip(s). Three curves are shown for different typical "Goodness Factors" G in the range 10 to 100. The "Goodness Factor" is a wellknown parameter by which the overall performance of electrical machines can be compared.

These relationships permit the ready application of the invention, at least in the "theta-pinch" aspect, to induction motors in that by controlling the minimum value of the quadrature flux density (Bq(min)) the flux ratio $B_{T(min)}/B_{T(max)}$ and thence the pole pitch of the transient travelling wave resulting from the recovery pole winding portion STDR can be adjusted between Tp and (1−s)Tp. In this way change in phase with slip variation can be accommodated. It is an important advantage and advance of the invention that this phase change can be achieved solely by winding design if required.

The techniques described above show that by departing from the well-established conventional form of machine in which the stator windings are regular and symmetrical and by introducing a form of the winding to produce operation under transient electromagnetic conditions the performance of the machine in terms of power factor or efficiency, or both, can be improved. Such modified machines can be very suitable for variable speed drive from an inverter in that harmonic filtering can be provided by the winding form, avoiding the existing requirement for an associated synchronous condenser machine.

It is known that machines have been proposed with irregular windings produced by changing the position of some coils to slots other than those indicated by a regular layout. However these proposals have been directed only at mitigating the "end effects" such as the "back torques" mentioned above when a rotor emerges from a stator field and attempts to make the end parts of the winding look like part of a continuing winding or provide a smoother transition to a lower flux value. The term machine used herein clearly includes generators and motors.

**Claims**

1. An alternating current electrical machine having a first machine portion and a second machine portion supported for relative movement and an air-gap between the portions, the machine having a primary winding of electrically conductive material on said first portion and a secondary winding of electrically conductive material on said second portion, means to energise at least said primary winding with an alternating current to produce a flux in said gap, said primary winding (ST) being of a form to create and maintain a field (SRF) along the gap, characterised in that the primary winding includes one part wound for at least two poles to one pole pitch ($T_{p1}$, STAL, LIMB) and at least another part wound for at least two successive poles to a shorter pole pitch ($T_{p2}$, $T_{p3}$, STAA, ASCB) to provide at least first and second respective sets of magnetic and electric field conditions across said gap, whereby negative reactive voltamperes are produced (Fig. 5) in said another part of the primary winding by the movement relative thereto of the secondary winding (RO, ROC, SYB).

2. An alternating current electrical machine having a first machine portion and a second machine portion supported for relative movement and an air-gap between the portions, the machine having a primary winding of electrically conductive material on said first portion and a secondary winding of electrically conductive material on said second portion, means to energise at least said primary winding with an alternating current to produce a flux in said gap, said primary winding being of a form to create and maintain a field along the gap characterised in that the number of turns per coil in one part of the primary winding is different from that in another part of the primary winding and by means to connect the parts of the primary winding in phase-shifted relation whereby the specific electric loading of said parts of the primary winding is different whereby negative reactive voltamperes are produced (Fig. 5) in said another part of the primary winding by the movement relative thereto of the secondary winding.

3. An electrical machine according to claim 1 or claim 2 characterised in that there is a change in spatial phase between adjacent parts (STDP, STSC) of the primary winding.

4. An electrical machine according to Claim 1 in which the number of turns per coil is varied at least from part to part (STDP, STDR) of the primary winding.

5. Use of a machine according to any one of the preceding claims for an electrical machine system including arranging the primary winding (LIMA, ASCA) so that at least part (ASCA) provides an asynchronous condenser.

6. Use according to Claim 5 including providing in the system an inverter (LCIA) to supply alternating power to the machine at a fixed or variable frequency, the asynchronous condenser winding permitting operation of the machine despite the inability of the inverter to provide reactive power.

7. Use according to Claim 5 or Claim 6 including causing or permitting the asynchronous condenser winding to provide in combination with appropriate rotor inertia a filter for unwanted harmonics of current in the system.

8. A machine according to claim 1 or claim 2 which is brushless and has a wound, uniformly slotted stator and a uniform rotor.

**Patentansprüche**

1. Wechselstrommaschine mit einem ersten Maschinenabschnitt und einem zweiten Maschinenabschnitt, welche für eine Relativbewegung zueinander gehalten werden, mit einem Luftspalt zwischen den Abschnitten, wobei die Maschine eine Primärwicklung aus elektrisch leitfähigem Material an dem ersten Abschnitt und eine Sekundärwicklung aus elektrisch leitfähigem Material an dem zweiten Abschnitt aufweist, wobei eine Einrichtung zur Erregung wenigstens der Primärwicklung mit einem Wechselstrom vorhanden ist zum Erzeugen eines Kraftflusses in dem Spalt, und wobei die Primärwicklung (ST) eine Form aufweist, um ein Feld (SRG) entlang des Spaltes zu erzeugen und aufrechtzuerhalten, dadurch gekennzeichnet, daß die Primärwicklung einen Teil aufweist, welcher für wenigstens zwei Pole mit einer Polteilung ($T_{p1}$, STAL, LIMB) gewickelt ist und wenigstens einen anderen Teil, welcher für wenigstens zwei aufeinanderfolgende Pole mit einer kürzeren Polteilung ($T_{p2}$, $T_{p3}$, STAA, ASCB) gewickelt ist, um wenigstens einen ersten bzw, einen zweiten Satz von magnetischen und elektrischen Feldzuständen über den Spalt zu erzeugen, wodurch negative Blindleistungen (Fig. 5) in dem anderen Teil der Primärwicklung durch die Relativbewegung der Sekundärwicklung (RO, ROC, SYB) dazu erzeugt werden.

2. Wechselstrommaschine mit einem ersten Maschinenabschnitt und einem zweiten Maschinenabschnitt, welche für eine Relativbewegung zueinander gehalten sind mit einem Luftspalt zwischen den Abschnitten, wobei die Maschine eine Primärwicklung aus elektrisch leitfähigem Material an dem ersten Abschnitt und eine Sekundärwicklung aus elektrisch leitfähigem Material an dem zweiten Abschnitt aufweist, wobei eine Einrichtung zur Erregung wenigstens der Primärwicklung mit einem Wechselstrom vorgesehen ist zur Erzeugung eines Kraftflusses in dem Spalt, und wobei die Primärwicklung eine Form Aufweist, um ein Feld entlang des Spaltes zu erzeugen aufrechtzuerhalten, dadurch gekennzeichnet, daß die Anzahl der Windungen pro Wicklung in einem Teil der Primärwicklung verschieden ist von der in einem anderen Teil der Primärwicklung, und daß eine Einrichtung zur Verbindung der Teile der Primärwicklung in phasenverschobener Beziehung vorgesehen ist, wodurch die spezifische elektrische Ladung der Teile der Primärwicklung verschieden ist, wodurch negative Blindleistungen (Fig. 5) in dem anderen Teil der Primärwicklung durch die Relativbewegung der Sekundärwicklung dazu erzeugt werden.

3. Elektrische Maschine nach Anspruch 1 oder 2, dadurch gekennzeichnet, daß eine Veränderung in der räumlichen Phase zwischen benachbarten Teilen (STDP, STSC) der Primärwicklung vorgesehen ist.

4. Elektrische Maschine nach Anspruch 1, dadurch gekennzeichnet, daß die Anzahl der Windungen pro Wicklung wenigstens von Teil zu Teil (STDP, STDR) der Primärwicklung verändert wird.

5. Verwendung einer Maschine nach einem der vorhergehenden Ansprüche für ein elektrisches Maschinensystem, mit einer Anordnung der Primärwicklung (LIMA, ASCA), so daß wenigstems ein Teil (ASCA) einen Asynchron-Kondensator bildet.

6. Verwendung nach Anspruch 5, wobei in dem System ein Wechselrichter (LCIA) vorgesehen ist, um Wechselstrom an die Maschine mit einer festen oder variablen Frequenz zu liefern, und wobei die Wicklung des Asynchron-Kondensators den Betrieb der Maschine trotz der Unfähigkeit des Wechselrichters, eine Blindleistung zu erbringen, ermöglicht.

7. Verwendung nach Anspruch 5 or 6, wobei die Wicklung des Asynchron-Kondensators veranlaßt wird oder dieser Wicklung ermöglicht wird, in Verbindung mit einem geeigneten Rotorträgheitsmoment ein Filter für unerwünschte Oberschwingungen des Stroms in dem System zu bilden.

8. Maschine nach Anspruch 1 oder 2, dadurch gekennzeichnet, daß sie bürstenlos ist und einen gewickelten, gleichmäßig geschlitzten Stator und einen gleichförmigen Rotor aufweist.

## Revendications

1. Machine électrique à courant alternatif comportant une première partie de machine et une seconde partie de machine qui sont supportées de manière à pouvoir éxécuter un mouvement relatif ainsi qu'un entrefer entre lesdites parties, la machines comportant un enroulement primaire formé d'une matière électriquement conductrice sur ladite première partie et un second enroulement formé d'une matière électriquement conductrice sur ladite seconde partie, un moyen pour exciter au moins ledit enroulement primaire avec un courant alternatif afin de produire un flux dans ledit entrefer, ledit enroulement primaire (ST) étant d'une forme permettant de créer et de maintenir un champ (SRF) le long de l'entrefer, machine caractérisée en ce que l'enroulement primaire comprend une partie bobinée pour former au moins deux pôles avec un certain pas polaire ($T_{p1}$, STAL, MILB) et au moins une autre partie bobinée pour former au moins deux pôles successifs avec un pas polaire plus court ($T_{p2}$, $T_{p3}$, STAA, CASB) afin de créer au moins des premier et second groupes respectifs de conditions de champ magnétique et électrique au travers dudit entrefer, de telle sorte que des volts-ampères réactifs négatifs soient produits (figure 5) dans ladite autre partie de l'enroulement primaire par le mouvement relatif correspondant de l'enroulement secondaire (RO, ROC, SYB).

2. Machine électrique à courant alternatif comportant une première partie de machine et une seconde partie de machine supportées de manière à exécuter un mouvement relatif ainsi qu'un entrefer entre lesdites parties, la machine comportant un enroulement primaire en matérieau électriquement conducteur sur ladite première partie et un enroulement secondaire en matériau électriquement conducteur sur ladite seconde partie, un moyen pour exciter au moins ledit enroulement primaire avec un courant alternatif afin de produire un flux dans ledit entrefer, ledit enroulement primaire étant d'une forme permettant de créer et de maintenir un champ le long de l'entrefer, machine caractérisée en ce que le nombre de spires par bobine dans une partie de l'enroulement primaire est différent de celui d'une autre de l'enroulement primaire et en ce qu'elle a un moyen de liaison des parties de l'enroulement primaire dans une relation déphasée, de telle sorte que la charge électrique spécifique desdites parties de l'enroulement primaire soit différente afin de produire des voltsampères réactifs négatifs (figure 5) dans ladite autre partie de l'enroulement primaire par le mouvement relatif correspondant de l'enroulement secondaire.

3. Machine électrique selon la revendication 1 ou la revendication 2, caractérisée en ce qu'il y a un changement de phase spatiale entre des parties adjacentes (STDP, STSC) de l'enroulement primaire.

4. Machine électrique selon la revendication 1, dans laquelle le nombre de spires par bobine est modifié au moins d'une partie à une autre (STDP, STDR) de l'enroulement primaire.

5. Utilisation d'une machine selon l'une quelconque des revendications précédentes pour un système pour machine électrique consistant à agencer l'enroulement primaire (MILA, CASA) de façon qu'au moins une partie (CASA) constitue un convertisseur asynchrone.

6. Utilisation conforme à la revendication 5, consistant à prévoir dans le système un onduleur (OCLA) pour fournir du courant alternatif à la machine à une fréquence fixe ou variable, l'enroulement du convertisseur asynchrone permettant un fonctionnnement de la machine malgré l'incapacité d l'onduleur à fournir de la puissance réactive.

7. Utilisation conforme à la revendication 5 ou à la revendication 6, consistant à faire en sorte, ou à permettre, que l'enroulement du convertisseur asynchrone constitue, en combinaison avec une inertie appropriée de rotor, un filtre pour des harmoniques indésirables de courant dans le système.

8. Machine selon la revendication 1 ou la revendication 2, qui est sans balais et qui comporte un stator, bobiné et pourvu d'encoches uniformes, ainsi qu'un rotor uniforme.

Fig. 1

PRIOR ART

0 0 2 5 2 9 7

SECTION 1
3 POLES, $T_{P1} = 0.2025m$

SECTION 2
3 POLES, $T_{P2} = 0.162m$

R R R -B -B Y Y Y -R -R B B B -Y -Y R R R -B -B Y Y -R -R B B -Y -Y R R R -B -B Y Y -R -R B B -Y -Y

COIL 1

COIL 23

COIL 40

ST

RO

SECTION 3
2 POLES $T_{P3} = 0.108$

R R -B Y -R B B -Y

COIL 41

ST

RO

PHASE SEQUENCE R-Y-B

Fig. 2

0 025 297

Fig 3

+j

LAGGING POWER FACTOR

11,43 · 37 · 4 · 31 · 25 · 19 · 12 · 32,38 · 5 · 26 · 13 · 20

46

47

COIL No.

$I_B$

PHASE SEQUENCE R-Y-B
(C.C.W. ROTATION)

REFERENCE

50 Hz    S = 0.218

Fig. 4

1    $\phi_R$    COIL 23    COIL 25    $\phi_B$    3

$3\phi$
R-Y-B

COIL 27

$\phi_Y$

OSH

6

Fig. 5

Fig. 6

Fig. 7a

Fig. 7b

Fig. 8a

Fig. 8b

Fig. 9

Fig. 10.1

COIL 5

45  40  35  30  25  20  15  10

NEUTRAL

$I_y$

$I_b$

Fig. 10.2

10.1 10.2

9

3∅, 50Hz

SPS

SPS

SPS

1 2 3 4 5 6 7 8 9

SYB

PYB

ASCB

LIMB

Fig. 11a

SPS
CONNECTION

| 3 | 8 | 4 |
| 3 | 5 | 7 |
| 2 | 4 | 9 |
| 2 | 6 | 7 |
| 1 | 6 | 8 |
| 1 | 5 | 9 |

SLIP, "S" (per unit)

1·0    0·8    0·6    0·4    0·2    0

Fig. 11b

11

COIL 46 50 55 60 65 70 75 80 85 90 1

A

Fig. 12.1

12.1 | 12.2

Fig. 12.2

Fig. 13

Fig. 14

14